(19) Europäisches Patentamt / European Patent Office / Office européen des brevets

(11) **EP 3 523 024 B1**

(12) **EUROPEAN PATENT SPECIFICATION**

(45) Date of publication and mention
of the grant of the patent:
**26.08.2020 Bulletin 2020/35**

(51) Int Cl.:
*B01J 23/42* *(2006.01)*    *B01J 35/06* *(2006.01)*
*B01D 46/00* *(2006.01)*    *B01J 35/02* *(2006.01)*
*C01B 21/20* *(2006.01)*

(21) Application number: **17772436.6**

(22) Date of filing: **27.09.2017**

(86) International application number:
**PCT/EP2017/074465**

(87) International publication number:
**WO 2018/065271 (12.04.2018 Gazette 2018/15)**

(54) **A WIRE FOR MANUFACTURING CATALYST GAUZES**

DRAHT ZUR HERSTELLUNG VON KATALYSATORNETZEN

FIL DE FABRICATION DE GAZES CATALYTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2016 EP 16192645**

(43) Date of publication of application:
**14.08.2019 Bulletin 2019/33**

(73) Proprietor: **Umicore AG & Co. KG
63457 Hanau-Wolfgang (DE)**

(72) Inventors:
• **VOTSMEIER, Martin
69469 Weinheim (DE)**
• **BORN, Dirk
63599 Biebergemünd (DE)**

(56) References cited:
**EP-A1- 0 364 153**    **WO-A1-92/02301**
**DE-A1- 2 829 035**    **US-A- 5 268 157**
**US-A- 5 699 680**

**Description**

FIELD OF INVENTION

The present patent application falls in the domain of catalyst gauzes (which can be denominated in the generic term *gauze(s)* in the present application).

More precisely, the present invention concerns a wire material to be used for manufacturing a catalyst gauze.

In particular, the present invention concerns a wire material for weaving or knitting (e.g. warp or flat-bed knitting) catalyst gauzes. Such a wire material is known as to be made of a single filament, generally having a diameter comprised between 0,05 and 0,110 mm; and is usually made of Pt or of a Pt-rich alloy and is therefore a Pt-based or a Pt-rich alloy-based wire.

In the framework of the present invention, a Pt-rich alloy is intended to mean an alloy with 50,0wt% or more Pt. For instance, the twisted wire material according to the invention is made from an alloy with at least 75,0wt% Pt.

BACKGROUND OF INVENTION

Usually, at least one of the above-described wire is woven or knitted so as to fabric catalyst gauzes made from platinum or from an alloy of platinum with other precious metals as minor components.

The knitted or woven wire (or plurality of wires) has a predetermined length L which, depending on the knitting type, is usually defined so as to determine the mesh and the size of the gauzes.

These catalyst gauzes are usually used in a reactor for ammonia oxidation to NO, an intermediate step in the manufacture of nitric acid.

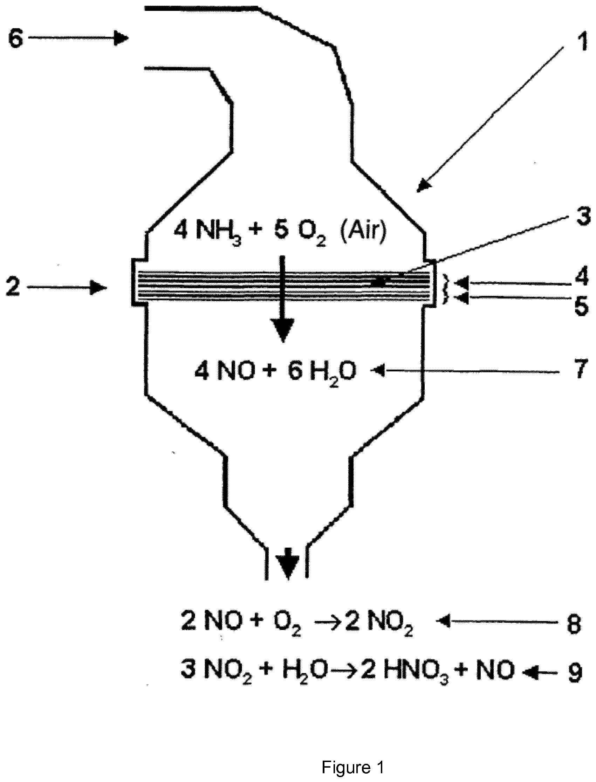

Figure 1 shows a representation of a reactor that is catalytically oxidizing ammonia and uses a catalyst pack and getter gauzes (Pd-based gauzes) for collecting the Pt and Rh (and Pd) losses during the reaction. In this figure, the reaction zone 2 of the flow reactor 1, the catalyst pack 3, which comprises several superimposed catalyst gauzes (PtRh-based gauzes) 4 in series and downstream getter gauzes 5, is arranged in a plane perpendicular to the direction of flow.

The ammonia/atmospheric oxygen mixture 6 flows through the catalyst pack under atmospheric or increased pressure. Ignition of the gas mixture takes place in the entry region, and the combustion reaction yields nitrogen monoxide (NO) and water 7 involving the entire catalyst pack. The NO in the reaction gas mixture 7 flowing out, subsequently reacts with the excess atmospheric oxygen (or additional secondary oxygen/air) to yield $NO_2$ 8, which forms nitric acid with water in a downstream absorption 9. The product may be fed, for example, to fertilizer production.

During the ammonia to NO oxidation process, $N_2O$ is produced as an undesired by-product (as depicted in figure 1). $N_2O$ is considered as a very potent greenhouse gas, for which reason it is important to limit the production of $N_2O$ during ammonia oxidation.

It is known from WO01/87771 that catalyst gauzes made from Pd or Pd-rich wire used downstream of a traditional Pt-based catalyst gauze is not only employed for collecting Rh and Pt lost occurring upstream in the process, but may also be used to reduce the amount of $N_2O$ produced. This probably works by dissociation of $N_2O$ molecules.

Such Pd-based catalyst gauzes are however mechanically relatively weak, which means that they can develop breaks during use, which will obviously cause a part of the $N_2O$ to bypass the Pd-based catalyst gauze without contact with the catalytically active metal. In addition, during collection of Pt and Rh, the Pd surface is partially blocked, so $N_2O$ decomposition is reduced. This effect increases with increased (cumulative) losses of Pt; Rh during the application process. For this reason, the $N_2O$ level will increase during the period of use, so that such Pd-based catalyst gauzes have a limited technical life, and may even require the shutdown of an ammonia oxidation plant to replace the catalyst gauzes. It is therefore a matter of fact that, although (being mechanically strong enough so as to be) suitable for collecting Rh;Pt, it remains non-technically (and economically) viable to adapt such a getter gauze for catalysing $N_2O$.

Indeed, the Pd-based gauzes are suitable for getting Pt; Rh which are volatilized during catalysis of ammonia and, being provided downstream in the process; are expected to be less exposed to the ammonia flow. This is why these Pd-based gauze are not expected to have the same lifetime as the Pt; Rh-based gauzes. In another words, although a Pd-based gauze is sufficiently resistant for being used as a Pt; Rh getter; it cannot be employed as an additional NO catalyst without inherent constraints related to this unusual use that make this alternative not sustainable; for the reasons explained above.

There is therefore a need for an alternative to the prior art solution in order to improve the catalysis efficiency of the gauze, in particular, to decrease the $N_2O$ selectivity in the ammonia $\rightarrow$ NO conversion reaction.

SUMMARY OF INVENTION

The present invention aims to solve or reduce the abovementioned and other problems by providing a wire as above-described in the preamble characterized in that it is a twisted wire comprising an assembly of *n* intertwined filaments, *n* being an integer with $2 \leq n \leq 8$, wherein each of said filaments comprises at least 50% by weight of Pt, said filaments being twisted together over their length so that each of the filaments is wound to at least one other filament.

Preferably, said wire consists of *n* intertwined filaments, *n* being an integer equal to 3 or 4, so that the wire according to the invention may comprise three or four filaments.

Preferably, the twisted wire is made of a material comprising at least an alloy with at least 50,0wt% not more than 95,0wt% Pt. Optionally, the twisted wire is made of a material comprising at least an alloy with at least 80,0wt% not more than 95,0wt% Pt. More preferably, the twisted wire material according to the invention is made from a Pt-Rh alloy with at least 90,0wt% Pt and at least 5,0wt% Rh.

In particular, each of said filaments comprise at least 90 % by weight of Pt.

Optionally, each of said filaments comprise at least 5 % by weight of Rh.

In the framework of the present invention, said twisted wire can be defined as an assembly of said n filaments (each of the filaments being preferably tubular).

In this assembly, the *n* filaments are secured together so that each of the filaments has at least a portion of a first outer surface that is at least partially contacting a second outer surface of at least one other filament.

In the context of the present invention, the twisted wire results from stranded filaments which are intertwined. Intertwining results here from filaments that are twisted together so as to provide the twisted wire.

In the twisted wire according to the present invention, each of said *n* filaments has its own reference diameter $d_f$, said reference diameter $d_f$ being defined as a diameter of a circle having a circumference that is equal to an outer perimeter of a cross-sectional shape of an individual filament of said at least two filaments, said cross-sectional shape of said individual filament being a shape of the individual filament on a section plane that is perpendicular to a longitudinal axis of said individual filament.

The twisted wire according to the invention has a reference diameter $d_w$ being defined as a diameter of a circle having a circumference that is equal to an outer perimeter of a cross-sectional shape of said twisted wire, said cross-sectional shape of the twisted wire being a shape of the twisted wire on a second section plane perpendicular to a longitudinal axis of said twisted wire.

Each filament of the twisted wire according to the invention has its own $d_f$; and the df values as well as the arrangement of the *n* filaments govern together the value of $d_w$.

When made of a woven or knitted twisted wire according to the present invention, the catalyst gauze presents a higher catalytic activity of the ammonia to NO conversion.

The increase of the catalytic activity of the gauze made of a woven or knitted twisted wire according to the present invention is ensured by a higher contact surface of said wire $[S_c]$ *per* gauze surface $[S_g]$ (ratio $S_c$: $S_g$).

Indeed, compared to a conventional gauze of a predetermined mesh value which is made of *n* independent single-filament wires (with $8 \geq n \geq 2$), a gauze having the same mesh value but which is made of a twisted wire constituted of n filaments (with $8 \geq n \geq 2$); provided that each of the single-filament wires and the filaments of the twisted wire according to the invention have at least identical active material composition [i.e. PGM material]; and optionally identical df; presents a higher $S_c$: $S_g$ ratio.

In the framework of the present invention, the term *mesh* is used for defining an average separation distance between two neighbouring parts of wire(s) in a gauze. In such a context, two gauzes presenting the same mesh value are characterized by the same average separation distance between two neighbouring parts of wire(s); meaning that for a given surface, a gauze made with a twisted wire comprising *n* filaments presents a higher quantity of material than a gauze made of two individual single-filament wires, so that the density of material is increased in the gauze made of the twisted wire according to the invention.

In the framework of the present invention, a gauze having increased density can therefore be achieved because the filaments of the twisted wire are secured (intertwined) together.

Surprisingly, it has been observed that, despite an unavoidable shadowing, the assembly of filaments of the twisted wire according to the invention allows the gauze that is made of said twisted wire to have a sufficient $S_c$: $S_g$ ratio so that the catalytic activity of the gauze is relatively improves versus a conventional gauze of $8 \geq n \geq 2$ individual single-filament wires.

Shadowing is defined in the framework of the present invention as an area of (partial or full) overlap between at least two outer surfaces of the filaments (or parts of filaments) comprised in the twisted wire according to the invention. A gauze made of a twisted wire according to the invention presents this overlap area which is an inaccessible area for the ammonia to enter into contact with the material constituting said filaments.

Indeed, in the twisted wire according to the invention, said filaments overlap so that at least one first filament of said *n* filaments has a first outer surface that is facing or that is contacting at least partially a second outer surface of at least one second filament of the *n* filaments. Indeed outer surfaces of two filaments which are at least partially facing or contacting each other are more difficultly accessible by the ammonia gas.

A partial overlap implies that part(s) of the outer surfaces are overlapping.

A full overlap implies that the entire outer surface of at least one filament is overlapping with the outer surface of other filaments.

Also, it has been unexpectedly observed that, when the twisted wire comprising *n* filaments according to the present invention is employed to fabric a gauze, such a resulting gauze shows an increase of the NO selectivity (decrease of the $N_2O$ selectivity) during catalysis.

Although not yet explained, the inventors believe that this increase in the NO selectivity is related to the combination of the improved $S_c$: $S_g$ ratio and an improved twisted wire network/geometry, compared to a conventional gauze made of n single-filament wires and having the same composition and mesh value.

In contrast to what is normally observed or expected, assembling (intertwining) 2 to 8 filaments so as to have a twisted wire according to the invention remains technically attractive because the intrinsically increase of the pressure drop (expected with an increase of the wire diameter) is compensated by an improved geometry of at least a part of an outer (catalytic) surface of said twisted wire, said geometry being governed by the outer surface of each of the filaments constituting said twisted wire and allowing the flow gas of ammonia to remain longer in contact with said outer surface of the twisted wire, when contacting the gauze made of said twisted wire. The inventor believe that this longer residence time is correlated to the increase of the NO selectivity of the ammonia oxidation reaction.

In addition to the compensation of the increase of the pressure drop, the technical effect related to the use of a twisted wire according to the invention is therefore an improvement of the overall efficiency of the catalysis process.

The twisted wire according to the present invention, when used in a gauze, allows a noticeable improvement of the catalysis activity and the NO selectivity of the oxidation of the ammonia with said gauze; and the use of a Pd-based gauze downstream of the process becomes irrelevant for capturing $N_2O$ formed during the process. In fact, Pd gauzes only reduce the already formed $N_2O$, and do not reduce the rate of primary formation which is the main effect resulting from the use of a twisted wire according to the invention. Use of a Pd-based gauze downstream in such a context is a major disadvantage versus a gauze made of a twisted wire of the present invention, mainly because $N_2O$ decomposition products are not NO or $NO_2$, but $N_2$ and $O_2$. So $NH_3$, by using a Pd-based gauze according prior art leads to a less effective $NH_3$ to NO conversion.

Other details and advantages of the present invention will become apparent from the description hereunder of preferred and non-limitative embodiments of the invention:

**Embodiment 1**:

In a first embodiment, the twisted wire according to the invention comprises n filaments, with n being an integer superior to 3 and inferior to 8. Preferably, $3 \leq n \leq 7$. More preferably, $3 \leq n \leq 6$. Most preferably, $3 \leq n \leq 5$. Alternatively, $4 \leq n \leq 8$ or $5 \leq n \leq 8$, or even $6 \leq n \leq 8$. *n* can also be equal to 3 or to 4, or even to 5. *n* can also be equal to 6, 7 or even 8.

In particular, said at least three (preferably tubular) filaments that are intertwined, i.e. twisted or spun together (wound to each other).

The twisted wire according to the invention therefore comprises at least three (preferably tubular) filaments which are twisted or spun together. Preferably, the wire according to the invention comprises *n* filaments, with *n* being an integer selected in the series of *n* = 4, 5, 6, 7 or 8; which are twisted or spun together.

When the filaments are twisted or spun around each other, the twisted wire according to the invention presents a less uniform outer surface allowing an improved residence time of the ammonia in the gauze made of said wire.

**Embodiment 2:**

In a second embodiment of the invention, said filaments have its own reference diameter df inferior or equal to 0,100 mm and superior or equal to 0,010 mm, each first reference diameter df being defined as the diameter of a circle having the same area as the cross sectional area of the corresponding filament.

Optionally, $0.010 \text{ mm} \leq d_f \leq 0,150 \text{ mm}$; alternatively, $0,010 \text{ mm} \leq d_f \leq 0,100 \text{ mm}$; preferably $0,010 \text{ mm} \leq d_f \leq 0,075 \text{ mm}$; more preferably $0,010 \text{ mm} \leq d_f \leq 0,070 \text{ mm}$; most preferably $0,010 \text{ mm} \leq d_f \leq 0,065 \text{ mm}$; even more preferably $0,010 \text{ mm} \leq d_f \leq 0,060 \text{ mm}$. Optionally, $0,060 \text{ mm} \leq d_f \leq 0,065 \text{ mm}$.

If $d_f > 0,150 \text{ mm}$; the twisted wire diameter resulting from assembling n wires having said $d_f > 0,150 \text{ mm}$ is too large for being technically advantageous, as an increase of the pressure drop during used of a gauze made of said wire.

**Embodiment 3:**

In a third embodiment of the invention, $d_w$ does not exceed 0,300 mm. Optionally, $d_w$ is superior or equal to 0,040 mm.

In particular, the wire according to the invention has a reference diameter $d_w$ being defined as the diameter of a circle having the same area as the cross sectional area of the wire, with $0.040 \text{ mm} \leq d_w \leq 0,300 \text{ mm}$.

Preferably, $0,040 + (e + f) \leq d_w \leq 0,300 - (g + h)$; or: $0,040 + (e + f) \leq d_f$ and $d_f \leq 0,300 - (g + h)$, where **e** and **g** are expressed in mm.

**e** can independently have the following value: 0; 0,010; 0,020; 0,030; 0,040; 0,050; 0,060; 0,070; 0,080; 0,090; 0,100; 0,110; 0,120; 0,130; 0,140; 0,150; 0,160; 0,170; 0,180; 0,190; 0,200; 0,220; 0,230; 0,240; or 0,250.

**g** can independently have the following value: 0; 0,010; 0,020; 0,030; 0,040; 0,050; 0,060; 0,070; 0,080; 0,090; 0,100; 0,110; 0,120; 0,130; 0,140; 0,150; 0,160; 0,170; 0,180; 0,190; 0,200; 0,220; 0,230; 0,240; or 0,250.

Also, **e** can be equal to **g** or **e** can be higher or lower than **g**.

f and h (which are expressed in mm) can independently have the following value: 0; 0,001; 0,002; 0,003; 0,004; 0,005; 0,006; 0,007; 0,008; 0,009; or 0,010. Also, f can be equal to h or f can be higher or lower than h.

Also, **e** can be equal to 0; 0,010; 0,020; 0,030; 0,040; 0,050; 0,060; 0,070; 0,080; 0,090; 0,100; 0,110; 0,120; 0,130; 0,140; 0,150; 0,160; 0,170; 0,180; 0,190; 0,200; 0,220; 0,230; 0,240; or 0,250.

Also, **g** can be equal to 0; 0,010; 0,020; 0,030; 0,040; 0,050; 0,060; 0,070; 0,080; 0,090; 0,100; 0,110; 0,120; 0,130; 0,140; 0,150; 0,160; 0,170; 0,180; 0,190; 0,200; 0,220; 0,230; 0,240; or 0,250.

Also, **e** can be equal to **g** or **e** can be higher or lower than **g**.

Also, f can be equal to 0; 0,001; 0,002; 0,003; 0,004; 0,005; 0,006; 0,007; 0,008; 0,009; or 0,010.

Also, h can be equal to 0; 0,001; 0,002; 0,003; 0,004; 0,005; 0,006; 0,007; 0,008; 0,009; or 0,010.

Also, f can be equal to h or f can be higher or lower than h.

More preferably, $d_w$ = 0,150 mm or 0,140 mm.

**Embodiment 4:**

In a fourth embodiment of the invention, df can be comprised in the following ranges (expressed in mm):

- 0,010 mm $\leq d_f \leq$ 0,140 mm;
- 0,010 mm $\leq d_f \leq$ 0,130 mm;
- 0,010 mm $\leq d_f \leq$ 0,120 mm;
- 0,010 mm $\leq d_f \leq$ 0,110 mm;
- 0,010 mm $\leq d_f \leq$ 0,115 mm;
- 0,010 mm $\leq d_f \leq$ 0,090 mm;
- 0,010 mm $\leq d_f \leq$ 0,080 mm;
- 0,010 mm $\leq d_f \leq$ 0,070 mm;
- 0,010 mm $\leq d_f \leq$ 0,060 mm;
- 0,040 mm $\leq d_f \leq$ 0,080 mm;
- 0,050 mm $\leq d_f \leq$ 0,075 mm;
- 0,055 mm $\leq d_f \leq$ 0,070 mm;
- 0,055 mm $\leq d_f \leq$ 0,065 mm;
- 0,055 mm $\leq d_f \leq$ 0,060 mm;
- 0,055 mm $\leq d_f \leq$ 0,150 mm;
- 0,060 mm $\leq d_f \leq$ 0,150 mm;
- 0,070 mm $\leq d_f \leq$ 0,150 mm;
- 0,080 mm $\leq d_f \leq$ 0,150 mm;
- 0,090 mm $\leq d_f \leq$ 0,150 mm;
- 0,100 mm $\leq d_f \leq$ 0,150 mm;
- 0,110 mm $\leq d_f \leq$ 0,150 mm;
- 0,120 mm $\leq d_f \leq$ 0,150 mm;
- 0,130 mm $\leq d_f \leq$ 0,150 mm;
- 0,140 mm $\leq d_f \leq$ 0,150 mm.

In such a case, the twisted wire according to the invention comprises *n* filaments, each of these *n* filaments having its own $d_f$ value.

Optionally, each filament of the *n* filaments has its own df that can be adjusted so that, when said filaments are assembled together, $d_w$ is preferably inferior or equal to 0,300 mm.

Preferably, each filament of the n filaments has its own df that can be adjusted so that, when said filaments are assembled together, $d_w$ is superior or equal to 0,040 mm.

**Embodiment 5:**

In a fifth embodiment of the invention, $d_f$ can also be comprised in the following ranges (expressed in mm):

$$0,010 + a \leq d_f \leq 0,150 - b;$$

where a and b (which are expressed in mm) can independently have the following value: 0; 0,010; 0,020; 0,030; 0,040; 0,050; 0,060; 0,070; 0,080; 0,090; 0,100; 0, 110; 0,120; 0,130; or 0,140.

Also, a can be equal to 0; 0,010; 0,020; 0,030; 0,040; 0,050; 0,060; 0,070; 0,080; 0,090; 0,100; 0,110; 0,120; 0,130; or 0,140.

Also, b can be equal to 0; 0,010; 0,020; 0,030; 0,040; 0,050; 0,060; 0,070; 0,080; 0,090; 0,100; 0,110; 0,120; 0,130; or 0,140.

In such Embodiment 5, the twisted wire according to the invention comprises $n$ filaments, each of these $n$ filaments having its own $d_f$ value.

Optionally, each filament of the $n$ filaments has its own df that can be adjusted so that, when said filaments are assembled together, $d_w$ is preferably inferior or equal to 0,300 mm.

Preferably, each filament of the $n$ filaments has its own $d_f$ that can be adjusted so that, when said filaments are assembled together, $d_w$ is superior or equal to 0,040 mm.

Also, a can be equal to b or a can be higher or lower than b.

Also, c can be equal to d or c can be higher or lower than d.

For instance a can be equal to 0,010 and b can be equal to 0,020; or a and b maybe equal to 0,010; etc.

Preferably, $0,010 + (a + c) \leq d_f \leq 0,150 - (b + d)$; or: $0,010 + (a + c) \leq d_f$ and $d_f \leq 0,150 - (b + d)$.

where a and b (are expressed in mm) can independently have the following value: 0; 0,010; 0,020; 0,030; 0,040; 0,050; 0,060; 0,070; 0,080; 0,090; 0,100; 0,110; 0,120; or 0,130, and where c and d (which are expressed in mm) can independently have the following value: 0; 0,001; 0,002; 0,003; 0,004; 0,005; 0,006; 0,007; 0,008; 0,009; or 0,010.

Also, a can be equal to 0; 0,010; 0,020; 0,030; 0,040; 0,050; 0,060; 0,070; 0,080; 0,090; 0,100; 0,110; 0,120; or 0,130.

Also, b can be equal to 0; 0,010; 0,020; 0,030; 0,040; 0,050; 0,060; 0,070; 0,080; 0,090; 0,100; 0,110; 0,120; or 0,130.

Also, c can be equal to 0; 0,001; 0,002; 0,003; 0,004; 0,005; 0,006; 0,007; 0,008; 0,009; or 0,010.

Also, d can be equal to 0; 0,001; 0,002; 0,003; 0,004; 0,005; 0,006; 0,007; 0,008; 0,009; or 0,010.

Also, a can be equal to b or a can be higher or lower than b.

Also, c can be equal to d or c can be higher or lower than d.

In such a preferred embodiment of Embodiment 5, the twisted wire according to the invention comprises $n$ filaments, each of these $n$ filaments having its own $d_f$ value.

In such a preferred embodiment of Embodiment 5, each filament of the $n$ filaments has its own df that can be adjusted so that, when said filaments are assembled together, $d_w$ is preferably inferior or equal to 0,300 mm.

Preferably, each filament of the $n$ filaments has its own df that can be adjusted so that, when said filaments are assembled together, $d_w$ is superior or equal to 0,040 mm.

Each of the individual Embodiments 1 to 5 described hereabove can be combined with one or more of the product embodiments described before it.

Also, the invention concerns a catalytic or catalyst gauze for the catalytic oxidation of ammonia into NO that comprises or is made, at least partially, of the twisted wire according to the invention.

Viewed from a third aspect, the invention also covers an installation for the catalytic oxidation of ammonia to NO, comprising at least one catalyst gauze according to the invention.

Equivalently, the invention covers a use of the gauze according to the invention in an installation for the catalytic oxidation of ammonia to NO.

BRIEF DESCRIPTION OF THE FIGURES

In order to explain the invention a non-limiting example of a specific embodiment of a catalyst gauze according to the invention and its use is given below, with reference to the following figures:

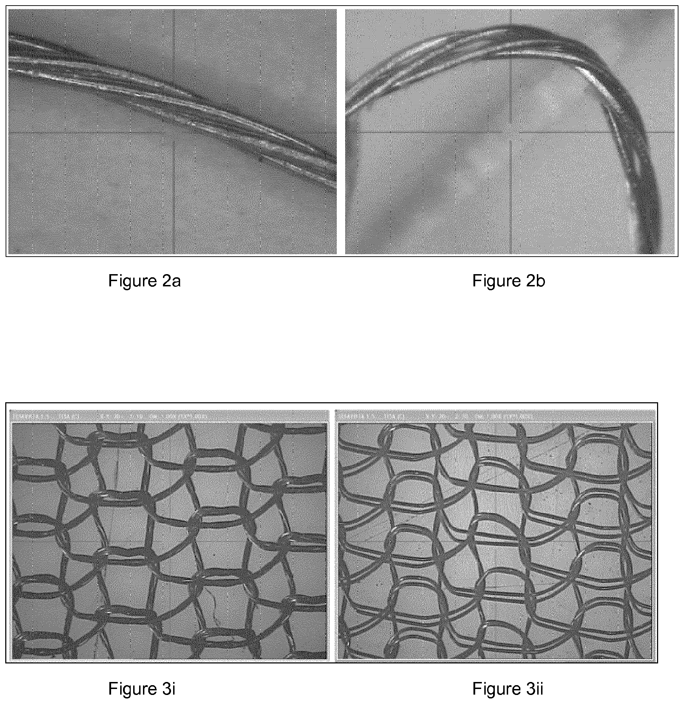

figures 2a and 2b, which show two magnified microscopic images (a-left and b-right), acquired from two different views, of a twisted wire according to the invention comprising four filaments which are twisted together over their length so that each of the filaments is wound to at least one other filament, resulting into a yarn wire. Each of the filaments is a cord and has a diameter of 0,060 mm. The composition of each of the filaments is PtRh5 [95,0 wt% Pt + 5,0 wt % Rh], and

figures 3i and 3ii, which depict: i)-left: a 2D structure of a catalyst gauze made of the twisted wire of figure 1; and ii)-right: a 2D structure of a catalyst gauze made of two single-filament wires, each of the wires having a diameter of 0,076 mm and a composition that is similar to the composition of the filaments constituting the wire of figure 1 (PtRh5). Gauzes i) and ii) have been knitted with the same pattern (identical knitting types).

DETAILED DESCRIPTION

The twisted wire according to the invention which is depicted in figures 2a and 2b is a yarn wire comprising four filaments, these filaments are preferably tubular.

Each of these filament is a cord (tubular-shaped) characterized by a first reference diameter df of +/- 0,060 mm $\pm$ 0,003 mm. These filaments are twisted so as to provide a twisted wire having a second reference diameter df of +/- 0,140 mm $\pm$ 0,003 mm.

Diameter where measured with conventional LAZER-based technology inspired of the well-known *Modular Laser Measuring Head for Diameter, Width, Height* principle.

In the context of the present invention, $d_w$ and dfare expressed in mm, and values of $d_w$ and df expressed as $0,(0)_m X_{[i1, il]}$, where $X_{[i1, il]} = X_{i1}X_{i2} ... X_{il}$, with $m$ and X being an integer; and X > 0, which is equivalent to a following alternative expression: $X\ 10^{-(m+\Sigma(il))}$; where $10^{-(m+\Sigma(il))}$ is a factor for designating a $m+\Sigma(il)$ decimal multiples (and sub-multiples) of X. $\Sigma(il) = l$. For instance if $X = 15$, $X_{i1} = 1$; and $X_{i2} = 5$, and $\Sigma(il) = \Sigma(i2) = 2$

Alternatively, a value expressed as $0,(0)_m X_{[i1, il]}$ is equivalent to a value expressed as $0.(0)_m X_{[i1, il]}$.

For instance, a value of 0,010 is equivalent to 0.010.

In said value of 0,010; m = 1 and: $X_{i1} = 1$; so that $\Sigma(il) = 1$, and is further equivalent to $1\ 10^{-(1+1)} = 1\ 10^{-2}$.

In another example, a value of 0,015 is equivalent to 0.015.

In said value of 0,015; $m = 1$ and: $X_{i1} = 1$; and $X_{i2} = 5$; so that $\Sigma(il) = \Sigma(i2) = 1+1 = 2$. Therefore, $0,015 = 15\ 10^{-(1+2)} = 15\ 10^{-3}$.

In another example, a value of 0,150 is equivalent to 0.150.

In said value of 0,150; $m = 0$ and: $X_{i1} = 1$; $X_{i2} = 5$; so that $\Sigma(il) = \Sigma(i2) = 2$, and is further equivalent to $1\ 10^{-(0+1+1)} = 1\ 10^{-2}$.

In the assembly of figures 2a and 2b, each of the filaments has its outer surface contacting at least partially at least one other neighboring filament outer surface, so that shadowing regions are created in the wire.

An outer surface of filament is defined in the context of this invention by the following formula:

-

$$2\pi L d_f;$$

with L being a predetermined length of the filament and $d_f$ the reference diameter of the filament.

These shadowing regions correspond to parts of the outer surface of each filament that are unavailable for the catalysis reaction. These shadowed regions are not free and cannot be accessed by the ammonia gas when the wire is used in a gauze. On the opposite, an available (or free; or catalytic) outer surface of a filament is an outer surface that will be available for reacting with the ammonia gas.

As depicted in figures 2a and 2b, each of the free outer surfaces (also considered here as the catalytic surface) of the filaments defines the catalytic surface of the wire according to the invention.

The catalyst gauzes **3i** of figure 3i results from the knitting of the 4-filaments wire of figure 2a. This wire was knitted on a flat-bed knitting machine into gauze **3i** with a weight per square meter (m2) of 800 g/m2. Gauze **3i** type is called here *Twisted type 01.*

The catalyst gauze **3ii** of figure 3ii was knitted under the same condition than for gauze **3i**, but with two single-filament wires (see figure 2b) having a diameter of 0,076 mm.

Compositions of the two single-filament wires used for the gauze catalyst **3ii** are the same than for the wire of gauze catalyst **3i**. Gauze **3ii** type is called here *Platinit type 01.*

**Comparative tests**

The catalyst gauzes **3i** and **3ii** were tested for their catalytic properties as follows:
A test reactor was used with an effective diameter of 10,0 cm. In this test reactor, the following catalyst gauzes were installed (*per* test), in order:

**Test 1: measurement of the *Twisted type* 01 catalytic gauze properties**

Bed of:

- 4 superimposed *Twisted type 01* gauzes which have been superimposed;
- 4 superimposed standard knitted catalyst gauzes [*Platinit type 01*] made of 2 single-filament wires of 0,076 mm diameter of Pt +5wt% Rh alloy with total weight of 800 g/m$^2$.

**Test 2: measurement of the reference *Platinit type 01* catalytic gauze properties**

Bed of:

- 8 superimposed standard knitted catalyst gauzes [*Platinit type 01*] made of 2 single-filament wires of 0.076 mm diameter of Pt+5,0wt% Rh alloy with total weight of 800 g/m$^2$;

In test 2, the *Platinit type 01* gauze is made of 2 single-filament wires. As illustrated in figure 3ii, the two filaments are not brought into intimate contact and are therefore present in a loose and isolated form. On the contrary, in test 1, the *Twisted type 01* comprises filaments which are secured together and are not single-filaments like in the *Platinit type 01* gauze.

**Results**

For tests 1 and 2, the bed of catalyst gauzes was heated to a temperature range: 870°C - 890°C. The reactor was operated at 3.6 or 5.0 bar absolute pressure.
A feed of approx. 4,76 kg/h $NH_3$ in the form of a 10,7 vol.-% (equals 6,7 % w/w) $NH_3$ mixture in air was supplied to the bed of catalyst gauzes. The $N_2O$ content was determined each day and after maximum 13 days on stream, and was as follows:

Table 1: Output results data from tests 1 and 2; including test parameters (pressure (bar), temperature temp [°C], load (in days), weight of ammonia (wt%); and post-ammonia oxidation results: $N_2O$ content (in ppm) in mixture and corresponding NO selectivity.

The nitrous oxide concentration in nitrous gases was determined by gas chromatography method.

| | | | | Type 01 twisted | | Type 01 standard | |
|---|---|---|---|---|---|---|---|
| load | pressure | temp | w_NH3 | Sel. [%] | N2O [ppm] | Sel. [%] | N2O [ppm] |
| 12 | 5 | 890 | 6,78 | 95,5 | 941 | 95,4 | 1048 |
| 12 | 5 | 890 | 6,72 | 95,6 | 935 | 95,2 | 1040 |
| 12 | 5 | 890 | 6,71 | 95,3 | 999 | 95,5 | 1091 |
| 12 | 5 | 890 | 6,72 | 95,9 | 1004 | 95,6 | 1099 |
| 8 | 5 | 870 | 6,75 | 95,6 | 1047 | 95,3 | 1057 |
| 8 | 5 | 890 | 6,7 | 95,4 | 814 | 95,2 | 849 |
| 8 | 5 | 890 | 6,74 | 95,3 | 861 | 95,3 | 909 |
| 8 | 5 | 890 | 6,72 | 95,7 | 858 | 95,4 | 889 |
| 8 | 5 | 870 | 6,77 | 95,4 | 1116 | 95,3 | 1150 |
| 8 | 5 | 870 | 6,76 | 95,4 | 1142 | 95,1 | 1167 |
| 15 | 5 | 890 | 6,7 | 95,9 | 1152 | 95,3 | 1255 |
| 15 | 5 | 890 | 6,67 | 95,6 | 1156 | 95,2 | 1184 |
| 15 | 5 | 890 | 6,71 | 95,8 | 1150 | 95,3 | 1268 |
| 15 | 5 | 890 | 6,65 | 95,8 | 1158 | 95,3 | 1274 |
| 12 | 3,6 | 870 | 6,66 | 95,5 | 1050 | 95,5 | 1160 |
| 12 | 3,6 | 870 | 6,73 | 95,7 | 1047 | 95,5 | 1147 |
| 12 | 5 | 870 | 6,65 | 95,7 | 1305 | 95,3 | 1411 |
| 12 | 5 | 870 | 6,66 | 95,7 | 1285 | 95,2 | 1387 |
| 12 | 5 | 890 | 6,68 | 96,1 | 1092 | 95,9 | 1170 |
| 12 | 3,6 | 870 | 6,72 | 96,1 | 1116 | 95,6 | 1188 |
| | | | mean value | 95,65 | 1061,40 | 95,37 | 1137,15 |

, where, w_NH3 = % w/w (NH3).

, where reactors loads' indications [t N/(m²d)] have a tolerance of +/-0.05 t N/(m²d), where t is ton; N is Nitrogen (equivalent to ammonia: mol. N = 14/17 x mol. $NH_3$); m² is a surface unit parameter (surface of a cross section (perpendicular to the flow gas direction) of the reactor [for instance in Figure 1, section →2 – 4←]; and d is 24 hours (a day).

Pressure was stable during the operation time and was on the level of 5,0 +/- 0,02 bar absolute and 3,6 +/- 0,02 bar absolute, according to the test schedule.

The selectivity to NO of the oxidation reaction, determined as mean value after 13 days, was 0,28% [confidence interval = +/- 0,097] higher by using a gauze made of the wire according to the invention; the $N_2O$ level being decreased by 6.7%.

NO selectivity ($S_{NO}$) is provided by the following formula:

$$S_{NO} \text{ (in \%)} = (X2/X1) \cdot 100\%;$$

where X1 = ammonia concentration in ammonia-air mixture; and
where X2 = concentration of oxidized ammonia ($NO+NO_2$), %w/w.

Although Table 1 provides 20 measurements, it must be understood that for some day of the 13-days measurement period, more than one load has been performed during this test period.

For instance, it must be understood that if the description discloses a wires made of 4 twisted or spun filaments, the scope of the present invention also covers a wire which may be made of *n* filaments, with *n* being an integer varying from 2 to 8, including these two values.

**Claims**

1. A wire for weaving or knitting a catalyst gauze, said wire being **characterized in that** it is a twisted wire comprising an assembly of *n* intertwined filaments, *n* being an integer with $2 \leq n \leq 8$, wherein each of said filaments comprises at least 50% by weight of Pt, said filaments being twisted together over their length so that each of the filaments is wound to at least one other filament.

2. Wire according to claim 1, **characterized in that** $3 \leq n \leq 8$.

3. Wire according to claim 1 or 2, **characterized in that** each of said filaments have its own reference diameter df inferior or equal to 0,100 mm and superior or equal to 0,010 mm, each first reference diameter df being defined as the diameter of a circle having the same area as the cross sectional area of the corresponding filament.

4. Wire according to any of claims 1 to 3, **characterized in that** $0,010$ mm $\leq d_f \leq 0,075$ mm; more preferably $0,010$ mm $\leq d_f \leq 0,070$ mm; and, most preferably $0,010$ mm $\leq d_f \leq 0,065$ mm.

5. Wire according to any of claims 1 to 4, **characterized in that** said wire has a reference diameter $d_w$ being defined as the diameter of a circle having the same area as the cross sectional area of the wire, with $0.040$ mm $\leq d_w \leq 0,300$ mm.

6. Wire according to any of claims 1 to 5, **characterized in that** it comprises at least four filaments

7. Wire according to any of claims 1 to 6, **characterized in that** each of said filaments comprise at least 90 % by weight of Pt.

8. Wire according to any of claims 1 to 7, **characterized in that** each of said filaments comprise at least 5 % by weight of Rh.

9. Wire according to claim 3, **characterized in that** $d_f = 0,060$ mm.

10. A catalyst gauze made of the wire according to any of claims 1 to 9

11. Use of the gauze according to claim 10 in an installation for the catalytic oxidation of ammonia into NO.

12. Installation for the catalytic oxidation of ammonia to NO, comprising at least one catalyst gauze according to claim 10.

**Patentansprüche**

1. Draht zum Weben oder Wirken eines Katalysatornetzes, wobei der Draht **dadurch gekennzeichnet ist, dass** er ein verdrillter Draht ist, der eine Anordnung von *n* miteinander verflochtenen Filamenten umfasst, wobei *n* eine ganze Zahl mit $2 \leq n \leq 8$ ist, wobei jedes der Filamente mindestens 50 Gew.-% Pt umfasst, wobei die Filamente über ihre Länge miteinander verdrillt sind, so dass jedes der Filamente mit mindestens einem anderen Filament gewickelt ist.

2. Draht nach Anspruch 1, **dadurch gekennzeichnet, dass** $3 \leq n \leq 8$.

3. Draht nach Anspruch 1 oder 2, **dadurch gekennzeichnet, dass** jedes der Filamente seinen eigenen Referenzdurchmesser df kleiner oder gleich 0,100 mm und größer oder gleich 0,010 mm aufweist, wobei jeder erste Referenzdurchmesser df als der Durchmesser eines Kreises definiert ist, der dieselbe Fläche wie die Querschnittsfläche des entsprechenden Filaments aufweist.

**4.** Draht nach einem der Ansprüche 1 bis 3, **dadurch gekennzeichnet, dass** 0,010 mm $\leq d_f \leq$ 0,075 mm; mehr bevorzugt 0,010 mm $\leq$ df $\leq$ 0,070 mm; und am meisten bevorzugt 0,010 mm $\leq$ df $\leq$ 0,065 mm.

**5.** Draht nach einem der Ansprüche 1 bis 4, **dadurch gekennzeichnet, dass** der Draht einen Referenzdurchmesser $d_w$ aufweist, der definiert ist als der Durchmesser eines Kreises mit derselben Fläche wie die Querschnittsfläche des Drahtes, mit 0,040 mm $\leq d_w \leq$ 0,300 mm.

**6.** Draht nach einem der Ansprüche 1 bis 5, **dadurch gekennzeichnet, dass** er mindestens vier Filamente umfasst.

**7.** Draht nach einem der Ansprüche 1 bis 6, **dadurch gekennzeichnet, dass** jedes der Filamente mindestens 90 Gew.-% Pt umfasst.

**8.** Draht nach einem der Ansprüche 1 bis 7, **dadurch gekennzeichnet, dass** jedes der Filamente mindestens 5 Gew.-% Rh umfasst.

**9.** Draht nach Anspruch 3, **dadurch gekennzeichnet, dass** $d_f$ = 0,060 mm.

**10.** Katalysatornetz hergestellt aus dem Draht nach jeglichen der Ansprüche 1 bis 9

**11.** Verwendung des Netzes nach Anspruch 10 in einer Anlage zur katalytischen Oxidation von Ammoniak zu NO.

**12.** Anlage zur katalytischen Oxidation von Ammoniak zu NO, umfassend mindestens ein Katalysatornetz nach Anspruch 10.

**Revendications**

**1.** Fil pour tisser ou tricoter une gaze catalytique, ledit fil étant **caractérisé en ce qu'il** s'agit d'un fil torsadé comprenant un ensemble de $n$ filaments entrelacés, $n$ étant un nombre entier avec $2 \leq n \leq 8$, dans lequel chacun desdits filaments comprend au moins 50 % en poids de Pt, lesdits filaments étant torsadés ensemble sur leur longueur de sorte que chacun des filaments est enroulé à au moins un autre filament.

**2.** Fil selon la revendication 1, **caractérisé en ce que** $3 \leq n \leq 8$.

**3.** Fil selon la revendication 1 ou 2, **caractérisé en ce que** chacun desdits filaments a son propre diamètre de référence df inférieur ou égal à 0,100 mm et supérieur ou égal à 0,010 mm, chaque premier diamètre de référence $d_f$ étant défini comme le diamètre d'un cercle ayant la même aire que l'aire en coupe transversale du filament correspondant.

**4.** Fil selon l'une quelconque des revendications 1 à 3, **caractérisé en ce que** 0,010 mm $\leq d_f \leq$ 0,075 mm ; plus préférablement 0,010 mm $\leq d_f \leq$ 0,070 mm ; et, le plus préférablement 0,010 mm $\leq d_f \leq$ 0,065 mm.

**5.** Fil selon l'une quelconque des revendications 1 à 4, **caractérisé en ce que** ledit fil a un diamètre de référence $d_w$ étant défini comme le diamètre d'un cercle ayant la même aire que l'aire en coupe transversale du fil, avec 0,040 mm $\leq d_w \leq$ 0,300 mm.

**6.** Fil selon l'une quelconque des revendications 1 à 5, **caractérisé en ce qu'**il comprend au moins quatre filaments

**7.** Fil selon l'une quelconque des revendications 1 à 6, **caractérisé en ce que** chacun desdits filaments comprend au moins 90 % en poids de Pt.

**8.** Fil selon l'une quelconque des revendications 1 à 7, **caractérisé en ce que** chacun desdits filaments comprend au moins 5 % en poids de Rh.

**9.** Fil selon la revendication 3, **caractérisé en ce que** $d_f$ = 0,060 mm.

**10.** Gaze catalytique constituée du fil quelque soient les revendications de 1 à 9. Gaze catalytique constituée du fil quelque soient les revendications de 1 à 9.

11. Utilisation de la gaze selon la revendication 10 dans une installation pour l'oxydation catalytique d'ammoniac en NO.

12. Installation pour l'oxydation catalytique d'ammoniac en NO, comprenant au moins une gaze catalytique selon la revendication 10.

$$4\ NH_3 + 5\ O_2\ \text{(Air)}$$

$$4\ NO + 6\ H_2O$$

$$2\ NO + O_2 \rightarrow 2\ NO_2$$

$$3\ NO_2 + H_2O \rightarrow 2\ HNO_3 + NO$$

Figure 1

Figure 2a

Figure 2b

Figure 3i

Figure 3ii

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0187771 A